# EUROPEAN PATENT APPLICATION

(11) **EP 4 815 181 A1**
(43) Date of publication of application: **30.09.2026**
(21) Application number: 25857239.5
(22) Date of filing: 31.07.2025
(51) Int. Cl.: H01M 50/567, H01M 50/566, H01M 50/538, H01M 10/04, H01M 50/15, H01M 50/152, H01M 50/188, H01M 50/562, H01M 50/169

(54) **BATTERY CELL, MANUFACTURING METHOD OF SAME AND BATTERY PACK AND VEHICLE INCLUDING SAME**

(30) Priority: 21.08.2024 KR 20240111929
(71) Applicant: LG Energy Solution, Ltd., Seoul 07335 (KR)
(72) Inventor: JO, Min-Ki, Daejeon 34122 (KR); KIM, Do-Gyun, Daejeon 34122 (KR); KIM, Sung-Hwan, Daejeon 34122 (KR); MOON, Ji-Wook, Daejeon 34122 (KR); JEON, Myeong-Jun, Daejeon 34122 (KR); CHUNG, Gu-Jin, Daejeon 34122 (KR)
(74) Representative: Goddar, Heinz J.
(86) International application number: PCT/KR2025/011462
(87) International publication number: WO 2026/043153

(57) **Abstract**

A battery cell according to an embodiment of the present disclosure includes an electrode assembly; a can accommodating the electrode assembly; and a first electrode terminal electrically connected to the electrode assembly. The first electrode terminal includes a current collector surface positioned on the inner side of the can, a column portion extending from the current collector surface and penetrating the can, and a terminal surface extending from the column portion and positioned on the outer side of the can, wherein the column portion has a first hole formed by penetrating the current collector surface, the terminal surface has a second hole communicating with the first hole and smaller than the first hole, and the second hole is sealed at the surface of the terminal surface.

## Description

### TECHNICAL FIELD

The present disclosure relates to a battery cell, a method for manufacturing the same, and a battery pack and a vehicle including such a battery cell. This application is based on and claims priority from Korean Patent Application No. 10-2024-0111929, filed on August 21, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to an electric vehicle (EV) or a hybrid electric vehicle (HEV) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries are assembled into a dense structure by overlapping or stacking multiple battery cells to provide high voltage and high current, and then electrically connected to form battery modules or battery packs. At this time, it is common to first configure a battery module including at least one battery cell, and then configure a battery pack by adding other components using this at least one battery module. Alternatively, in recent years, battery packs in the form of cell to pack, in which a plurality of battery cells are directly stored in a pack housing or the like without being modularized are also being manufactured.

There is an increasing demand for using a metal can-type cell as a battery cell applied to a vehicle battery pack. The shape of metal cans may be prismatic or cylindrical, and the cylindrical battery cell has a structure in which an electrode assembly in the form of a jelly-roll is accommodated inside the cylindrical can, and has an advantage of being more robust to impact or temperature than the pouch-type battery cell.

The process of manufacturing a battery cell using a cylindrical can may include the steps of deep drawing a metal sheet to form a circular bottom portion (closed surface) and a cylindrical tubular side wall portion connected thereto to manufacture the can, accommodating the electrode assembly into the can, and then covering and closing the open end of the can with a lid. As a closing method, butt welding or beading and crimping methods may be used.

Battery cells using butt welding have the advantage of increasing internal capacity within the same external dimensions compared to battery cells using beading and crimping methods. However, since welding after injection is difficult, an injection port should be provided in the lid, and the process of injecting after welding and sealing the injection port with a sealing component is required.

Meanwhile, in conventional battery cells, there is a case where the electrode terminal is riveted to the bottom portion of the can. The electrode terminal is inserted from the outside to the inside of the can by penetrating the bottom portion of the can, and a caulking jig for riveting is inserted from the open end of the can to compress the inner part of the electrode terminal toward the inner surface of the bottom portion of the can. At this time, the caulking jig moves up and down, and the process of compressing the inner part of the electrode terminal outward in the circumferential direction is performed several times. The caulking jig presses and forms the inner surface of the electrode terminal, and the inner surface of the electrode terminal is deformed by the shape of the caulking jig, so that it is difficult to form a flat portion on the inner surface of the electrode terminal. Since the flat portion is used as a coupling portion between the electrode terminal and other components, it has been difficult to maximize the coupling portion area in the prior art. And, as the electrode terminal is compressed from the inside of the can, if foreign matter is generated during this process, it remains inside the can, creating management difficulties.

### DISCLOSURE

### Technical Problem

The present disclosure is designed to solve the above-described problem, and therefore the present disclosure is directed to providing a battery cell with an improved injection structure and a method for manufacturing the same.

The present disclosure is also directed to providing a battery cell with an improved electrode terminal and a method for manufacturing the same.

The present disclosure is still also directed to providing a battery pack and a vehicle including such a battery cell.

### Technical Solution

A battery cell according to the present disclosure for solving the above-described problem includes an electrode assembly; a can accommodating the electrode assembly; and a first electrode terminal electrically connected to the electrode assembly. The first electrode terminal includes a current collector surface positioned on an inner side of the can, a column portion extending from the current collector surface and penetrating through the can, and a terminal surface extending from the column portion and positioned on an outer side of the can, wherein the column portion has a first hole penetrating the current collector surface, the terminal surface has a second hole communicating with the first hole and smaller than the first hole, and the second hole is sealed at a surface of the terminal surface.

In an embodiment, the can may include a side wall portion, a bottom portion connected to one axial end of the side wall portion, an open end provided at another axial end of the side wall portion, and the battery cell may include a lid covering the open end.

The electrode assembly may be an assembly in which a first electrode and a second electrode are wound with a separator interposed therebetween, and the electrode assembly may be accommodated inside the can so that an uncoated portion of the second electrode faces the open end.

A through hole may be formed in the bottom portion, and the first electrode terminal may be electrically connected to the first electrode by penetrating the through hole.

The battery cell may further include a first current collector plate electrically connected to the first electrode, at least a portion of the first current collector plate may be coupled to an inner surface of the first electrode terminal, and a hole aligned with the first hole may be formed in a central part of the first current collector plate.

The current collector surface may form an internal flange portion extending along an inner surface of the bottom portion from a first side of the column portion, and the terminal surface may form an external flange portion extending along an outer surface of the bottom portion from a second side of the column portion.

The inner surface of the internal flange portion may be flat.

The current collector surface may form an internal flange portion extending along an inner surface of the bottom portion from a first side of the column portion, and the internal flange portion may extend radially outward from the first side of the column portion disposed inside the can so as to extend radially further outward than the through hole, and may be bonded to the first current collector plate.

The terminal surface may form an external flange portion extending along an outer surface of the bottom portion from a second side of the column portion, and the external flange portion may be a plastic working portion formed by plastic working so that the second side protruding to the outside of the can in the column portion extends radially outward so as to extend radially further outward than the through hole.

The first electrode terminal may be made of metal, and the terminal surface may be formed by plastically deforming a part of the column portion that protrudes to an outside of the can.

A second hole sealing portion may be formed on the terminal surface.

The second hole sealing portion may be a molten metal solidification portion.

In an embodiment, the molten metal solidification portion may be formed by melting and then solidifying the first electrode terminal portion surrounding the second hole.

In another embodiment, the battery cell may further include a cap coupled to the external flange portion and blocking the second hole.

The cap may include a substrate portion in contact with an axial surface of the external flange portion; and an alignment protrusion extending axially inward from the substrate portion and inserted into the second hole.

The battery cell may further include a terminal gasket interposed between the first electrode terminal and the can. The terminal gasket may include an outer gasket interposed between the external flange portion and the outer surface of the bottom portion, an inner gasket interposed between the internal flange portion and the inner surface of the bottom portion, and an intermediate gasket interposed between the column portion and the through hole.

The lid may have a disk shape to block the open end of the can and may close it by bonding the side wall portion of the can to the edge of the lid.

A method for manufacturing a battery cell according to the present disclosure includes a can preparation step of preparing a can including a side wall portion, a bottom portion connected to one axial end of the side wall portion, an open end provided at anotheraxial end of the side wall portion, and then assembling a first electrode terminal preform including a current collector surface positioned on an inner side of the can, and a column portion that extends from the current collector surface, penetrates the can to protrude to the outside of the can, and has a first hole formed by penetrating the current collector surface in the central part, to the bottom portion; an electrode assembly receiving step of accommodating the electrode assembly in the can; a lid assembly step of covering and closing the open end of the can with a lid; a step of injecting an electrolyte into the can through the first hole; a step of plastically deforming the column portion protruding to the outside of the can to form a terminal surface extending from the column portion and positioned on an outer side of the can; and a step of sealing the first hole on a surface of the terminal surface to complete the first electrode terminal.

The lid assembly step may include a step of covering the open end of the can with the lid; and a step of bonding the side wall portion of the can and an edge contact surface of the lid.

The current collector surface of the first electrode terminal preform and the electrode assembly may be electrically connected to each other, and then the electrode assembly may be accommodated in the can.

The present disclosure also provides a battery pack including one or more battery cells according to the present disclosure.

A vehicle according to the present disclosure includes the battery pack according to the present disclosure.

### Advantageous Effects

According to one aspect of the present disclosure, by using the first electrode terminal preform including the column portion having the first hole, the injection structure may be improved because a separate injection port is not required in the lid.

According to one aspect of the present disclosure, during the process of riveting the first electrode terminal to the can, the first electrode terminal may be fixed at the outside of the can. Accordingly, there is an effect of suppressing the generation of foreign matter inside the can when manufacturing the battery cell.

According to one aspect of the present disclosure, the welding required to electrically connect the first electrode terminal and the electrode assembly may be performed at the outside of the can, and thus there is also an effect of preventing welding spatter from flowing into the can.

According to one aspect of the present disclosure, the welding area between the first electrode terminal and the first current collector plate may be maximized, thereby increasing the amount of current flowing between the first electrode terminal and the first current collector plate.

According to one aspect of the present disclosure, the vertical height of the electrode assembly may be increased as the height of the first electrode terminal is reduced, thereby improving the energy density of the battery cell.

According to another aspect of the present disclosure, since the battery cell uses butt welding, the energy density thereof may be increased compared to a battery cell using beading and crimping methods.

According to still another aspect of the present disclosure, the bonding part between the lid and the can is simplified, and there is no need to use a current collector plate for electrically connecting the second uncoated portion of the electrode assembly to the can, thereby reducing the number of components and assembly man-hours and securing more internal volume, enabling increased energy density.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a perspective view showing the appearance of a battery cell according to an embodiment of the present disclosure.
FIG. 2 is a cross-sectional view taken along line II-II' of FIG. 1.
FIG. 3 is an enlarged view of part A of FIG. 2.
FIGS. 4 and 5 are schematic diagrams for describing a method for manufacturing a battery cell.
FIG. 6 is a modified example of FIG. 3.
FIG. 7 is a modified example of FIG. 6.
FIG. 8 is another modified example of FIG. 3.
FIG. 9 is still another modified example of FIG. 3.
FIG. 10 is an enlarged view of part B of FIG. 2.
FIG. 11 is a modified example of FIG. 10.
FIG. 12 is a partial cutaway perspective view showing an example of a lid applicable to FIG. 11.
FIG. 13 is a view for describing a battery pack according to an embodiment of the present disclosure.
FIG. 14 is a view for describing a vehicle including the battery pack of FIG. 13.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations illustrated in the drawings are only some of the most preferred embodiments of the present disclosure, not intended to entirely represent the technical aspects of the present disclosure, so it should be understood that various equivalents and modifications may be made thereto at the time of filing the present application.

Additionally, the present disclosure includes various embodiments. For each embodiment, duplicate descriptions of substantially identical or similar configurations will be omitted, and differences will be mainly described.

Meanwhile, terms indicating directions such as upper, lower, left, right, front, and rear may be used in the present disclosure, but these terms are only for convenience of description, and it is obvious to those skilled in the art that the terms may vary depending on the position of a reference object or an observer.

For convenience of description, the direction along the longitudinal direction of the winding axis of the electrode assembly wound in the form of a jelly-roll in the present specification is referred to as the axial direction. And, the direction surrounding the winding axis is referred to as the circumferential direction or the perimeter direction. And, the direction closer to or away from the winding axis is referred to as the radial direction.

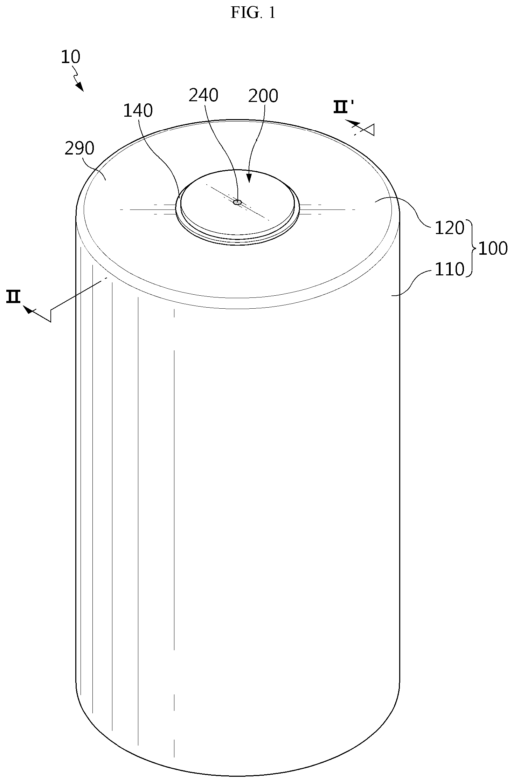

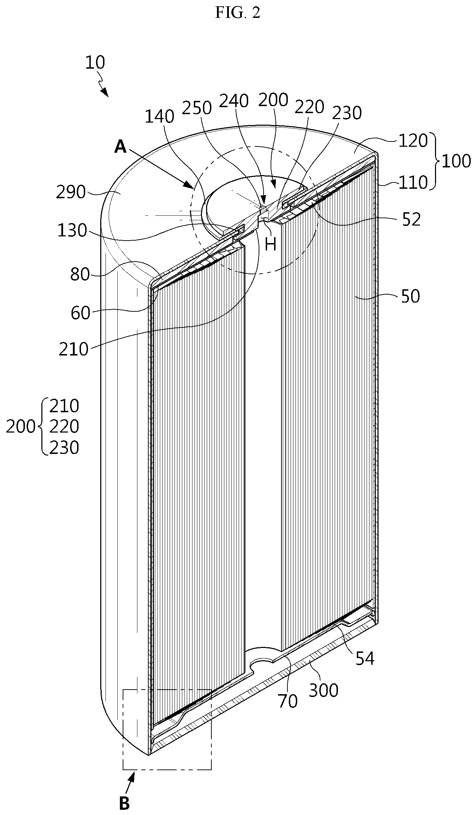

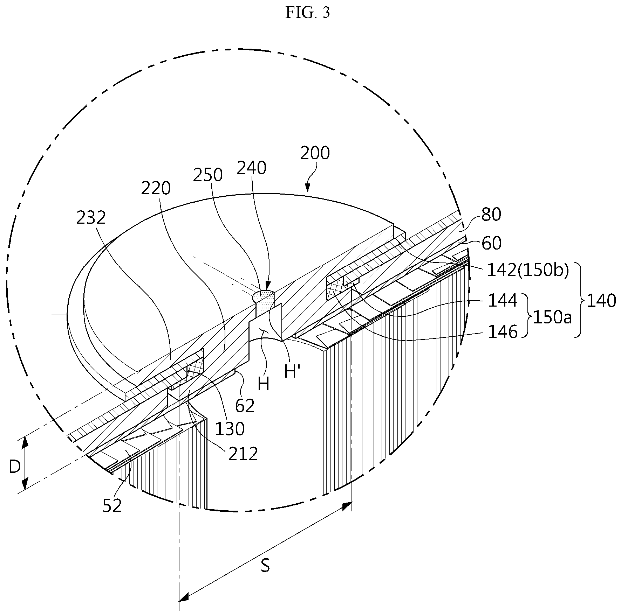

FIG. 1 is a perspective view showing the appearance of a battery cell according to an embodiment of the present disclosure, and FIG. 2 is a cross-sectional view taken along line II-II' of FIG. 1. FIG. 3 is an enlarged view of part A of FIG. 2.

Referring to FIGS. 1 to 3, a battery cell 10 includes an electrode assembly 50, a can 100, and a first electrode terminal 200.

The can 100 is configured to accommodate the electrode assembly 50.

The can 100 includes a side wall portion 110, a bottom portion 120 connected to one axial end of the side wall portion 110, and an open end provided at the other axial end of the side wall portion 110. The bottom portion 120 has a roughly flat shape. The side wall portion 110 may have a cylindrical shape, is connected to the bottom portion 120, and extends in the axial direction. The side of the side wall portion 110 that is not connected to the bottom portion 120 may define the open end of the can 100.

FIGS. 1 and 2 illustrate that the bottom portion 120 is included in the upper end of the can 100 and the open end is included in the lower end of the can 100. The open end may be formed in a part facing the bottom portion 120 of the can 100. The electrode assembly 50 may be accommodated through the open end formed in the can 100. The open end may be covered with a lid 300. The lid 300 may be coupled to the can 100 using butt welding. Therefore, the battery cell 10 may have a larger internal capacity for the same external shape than a battery cell using the beading and crimping methods. Therefore, energy density may be increased.

The bottom portion 120 and the side wall portion 110 may be manufactured by molding a metal sheet plated with nickel on the surface of steel by a deep drawing process, and trimming the front end of the side wall portion 110 with a punch while gripping it with a blank holder. Of course, the material of the can 100 is not limited thereto. The material of the can 100 may be a conductive metal, such as aluminum, steel, stainless steel, or the like, but is not limited thereto.

The bottom portion 120 forms the closed surface of the can 100. A through hole 130 is formed in the bottom portion 120, and the first electrode terminal 200 may penetrate the through hole 130. The first electrode terminal 200 may be fitted into the bottom portion 120. The first electrode terminal 200 may be riveted and fixed to the bottom portion 120 with a terminal gasket 140 interposed therebetween. The terminal gasket 140 is interposed between the first electrode terminal 200 and the bottom portion 120, which may seal the interior and exterior of the can 100 to prevent electrolyte leakage and electrically insulate the first electrode terminal 200 from the bottom portion 120. The terminal gasket 140 may be in close contact with the first electrode terminal 200 and the can 100 therebetween.

A portion of the first electrode terminal 200 is inserted into the can 100, and the other portion is exposed to the outside of the can 100. The first electrode terminal 200 includes a current collector surface 210 positioned on the inner side of the can 100, a column portion 220 extending from the current collector surface 210 and penetrating the can 100, and a terminal surface 230 extending from the column portion 220 and positioned on the outer side of the can 100.

The current collector surface 210 is a flat portion. The current collector surface 210 is a surface facing the electrode assembly 50. Preferably, the thickness of the current collector surface 210 is constant in the radial direction.

The first electrode terminal 200 may be made of metal, and the terminal surface 230 may be formed by plastically deforming a part of the column portion 220 that protrudes to the outside of the can 100. The first electrode terminal 200 may be made of aluminum. When the first electrode terminal 200 is made of aluminum, plastic working may be facilitated, and 10 series of aluminum having a relatively low electrical resistance may be applied.

The terminal surface 230 is a flat portion. Preferably, the thickness of the terminal surface 230 is constant in the radial direction.

A first hole H is formed in the column portion 220 through the current collector surface 210. The first hole H may extend axially in the central part of the current collector surface 210 and the column portion 220. The first hole H is sealed on the surface of the terminal surface 230. For example, a second hole sealing portion 240 may be formed in the terminal surface 230.

In particular, a second hole H' communicating with the first hole H and smaller than the first hole H is formed in the terminal surface 230, and the second hole H' is sealed on the surface of the terminal surface 230 by the second hole sealing portion 240.

The second hole H' is concentric with the first hole H and has an inner diameter smaller than or equal to the inner diameter of the first hole H, and the inner diameter of the first hole H is constant along the axial direction, but the inner diameter of the second hole H' may not be constant along the axial direction. For example, the second hole H' may have a shape in which the inner diameter decreases as it approaches the surface of the terminal surface 230.

According to an embodiment of the present disclosure, the first electrode terminal 200 may be fixed on the outside of the can 100 during the process of riveting the first electrode terminal 200 to the can 100. Conventionally, riveting is performed on the inside of the can, but according to an embodiment of the present disclosure, riveting may be performed on the outside of the can 100. Accordingly, there is an effect of suppressing the generation of foreign matter inside the can 100 when manufacturing the battery cell 10.

The first electrode terminal 200 is electrically connected to the electrode assembly 50. The current collector surface 210 of the first electrode terminal 200 is used for electrical connection. Unlike the prior art, the current collector surface 210 is not deformed by the caulking jig and may maintain a flat portion. This flat portion is used as a coupling portion for electrical connection with the electrode assembly 50, and unlike the prior art, the area of this coupling portion may be made sufficiently large.

The electrode assembly 50 may be in the form of a jelly-roll in which the first electrode and the second electrode are wound around a winding axis with a separator interposed therebetween. Here, the first electrode and the second electrode may be formed in a sheet shape. An additional separator for insulation from the can 100 may be provided on the outer circumferential surface of the electrode assembly 50.

The first electrode may be a positive electrode plate, and the second electrode may be a negative electrode plate. A positive electrode active material may be applied to one or both surfaces of the positive electrode plate, and a first uncoated portion 52 where the positive electrode active material is not applied may be formed at an end of the positive electrode plate. The first uncoated portion 52 may be exposed to the outside of the separator while forming a plurality of winding turns around the center of the electrode assembly 50 and may itself be used as an electrode tab. A negative electrode active material may be applied to one or both surfaces of the negative electrode plate, and a second uncoated portion 54 where the negative electrode active material is not applied may be formed at an end of the negative electrode plate. The second uncoated portion 54 may be exposed to the outside of the separator while forming a plurality of winding turns around the center of the electrode assembly 50 and may itself be used as an electrode tab. That is, the positive electrode plate and the negative electrode plate may each include uncoated portions that are not coated with an active material at the long side ends in the winding direction. And, the first uncoated portion 52 and the second uncoated portion 54 may be configured to face opposite directions. The first uncoated portion 52 may be accommodated inside the can 100 to be positioned at one end in the winding axis direction, and the second uncoated portion 54 may be accommodated inside the can 100 to be positioned at the other end in the winding axis direction.

Here, the positive electrode active material coated on the positive electrode plate and the negative electrode active material coated on the negative electrode plate may be used without limitation as long as they are active materials known in the art.

And, the separator may be a porous polymer film, for example, a porous polymer film made of a polyolefin-based polymer such as ethylene homopolymer, propylene homopolymer, ethylene/butene copolymer, ethylene/hexene copolymer, and ethylene/ methacrylate copolymer, either alone or in a stacked structure thereof.

As another example, the separator may be a conventional porous nonwoven fabric, for example, a nonwoven fabric made of high melting point glass fiber, polyethylene terephthalate fiber, and the like.

At least one surface of the separator may include a coating layer of inorganic particles. Additionally, the separator itself may be formed of a coating layer of inorganic particles. The particles constituting the coating layer may have a structure coupled to a binder so that an interstitial volume exists between adjacent particles.

For example, flag-shaped notching tabs may be formed in the first uncoated portion 52 and the second uncoated portion 54 by forming notches at predetermined intervals. In the jelly-roll type electrode assembly 50, the notching tabs may be bent radially and flattened. The notching tabs may be bent radially inward or outward. The notching tabs may be bent one by one during the process of winding the laminate to form the jelly-roll type electrode assembly 50. Alternatively, the notching tabs may be bent all at once after winding the laminate to form the jelly-roll type electrode assembly. The notching tabs of the first uncoated portion 52 and the notching tabs of the second uncoated portion 54 that are bent radially and overlapped in this way may provide a plane substantially perpendicular to the axial direction at both ends of the electrode assembly 50 in the axial direction.

The electrode assembly 50 may be accommodated inside the can 100 so that the second uncoated portion 54 faces the open end. Accordingly, the first electrode terminal 200 may be electrically connected to the first electrode of the electrode assembly 50 by penetrating the through hole 130.

The battery cell 10 may further include a first current collector plate 60 configured to be electrically connected to the first electrode and a second current collector plate 70 configured to be electrically connected to the second electrode. The first current collector plate 60 and the second current collector plate 70 may each be bonded to substantially flat surfaces formed by bending the notching tabs exposed to both axial ends of the electrode assembly 50. A method such as resistance welding, ultrasonic welding, or laser welding may be used for welding.

At least a portion of the first current collector plate 60 may be coupled to the inner surface of the first electrode terminal 200. Specifically, the first current collector plate 60 may be coupled to the current collector surface 210 of the first electrode terminal 200 by welding or the like.

An injection hole 62 aligned with the first hole H may be formed in the central part of the first current collector plate 60. During the manufacturing process, an electrolyte may be injected into the can 100 through the first hole H. Since the injection hole 62 of the first current collector plate 60 is aligned with the first hole H, the electrolyte may flow into the electrode assembly 50 through the injection hole 62.

And, the battery cell 10 may further include an insulator 80.

The insulator 80 may be provided between the first current collector plate 60 and the inner circumferential surface of the bottom portion 120. The insulator 80 prevents contact between the first current collector plate 60 and the can 100. The insulator 80 may be interposed between the inner circumferential surface of the side wall portion 110 and the electrode assembly 50. That is, the insulator 80 may be interposed between the first uncoated portion 52 and the can 100. This is to prevent contact between the first uncoated portion 52 extending toward the bottom portion 120 of the can 100 and the inner circumferential surface of the can 100.

Referring to FIG. 3, the column portion 220 extends in the axial direction. The current collector surface 210 forms an internal flange portion 212 extending along the inner surface of the bottom portion 120 from the first side of the column portion 220. The terminal surface 230 may form an external flange portion 232 extending along the outer surface of the bottom portion 120 from the second side of the column portion 220.

The inner surface of the internal flange portion 212 may be provided flat. The internal flange portion 212 may be provided parallel to the bottom portion 120.

The internal flange portion 212 may extend radially outward from the first side of the column portion 220 disposed inside the can 100 so as to extend radially further outward than the through hole 130, and may be bonded to the first current collector plate 60.

The external flange portion 232 may be a plastic working portion formed by plastic working so that the second side protruding to the outside of the can 100 in the column portion 220 extends radially outward so as to extend radially further outward than the through hole 130.

The plastic working portion may be formed by spinning. In this way, the device for riveting the first electrode terminal 200 may be a spinning device positioned outside the can 100.

The lid 300 may be electrically connected to the can 100. The can 100 may be electrically connected to the second current collector plate 70. Accordingly, the first electrode terminal 200 may have a first polarity, and the can 100 may have a second polarity. In particular, both the bottom portion 120 of the can 100 and the side wall portion 110 connected thereto may have a second polarity. Accordingly, the can 100 may have both the first electrode terminal 200 and the second electrode terminal 290 disposed at one axial end, for example, at the bottom portion 120. Then, the can 100 may have both the busbar connected to the first electrode terminal 200 and the busbar connected to the second electrode terminal 290 positioned at one axial end of the can 100. In one example, the first electrode terminal 200 may be a positive electrode terminal, and the second electrode terminal 290 may be a negative electrode terminal. Of course, the opposite may also be true. Therefore, the battery cell 10 according to the present disclosure may simplify the electrical connection structure by connecting both the positive electrode and the negative electrode in one direction when electrically connecting a plurality of battery cells 10. Additionally, since the battery cell 10 according to the present disclosure has a structure in which most of the bottom portion 120 of the can 100 may be used as a second electrode terminal 290, it has the advantage of securing a sufficient area for welding components for electrical connection.

Preferably, the battery cell 10 may be a cylindrical secondary battery having, for example, a form factor ratio (ratio of diameter to height) greater than approximately 0.4. Preferably, the diameter of the battery cell 10 may be 40 mm to 50 mm, and the height may be 60 mm to 130 mm. The form factor of the battery cell 10 may be, for example, 46110, 4875, 48110, 4880, or 4680.

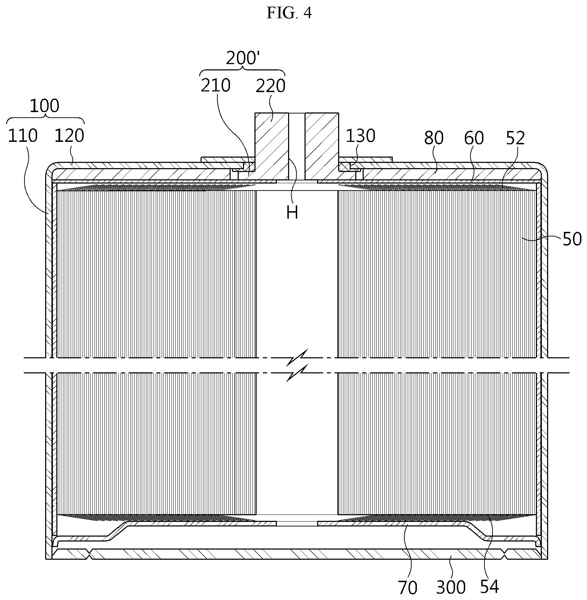

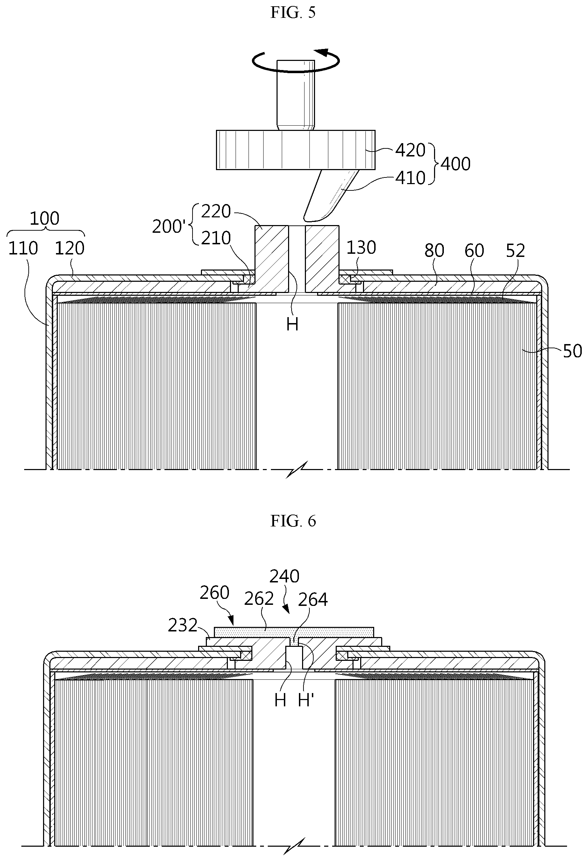

The battery cell 10 described with reference to FIGS. 1 to 3 may be manufactured according to the following manufacturing method, and FIGS. 4 and 5 are schematic diagrams for describing a method for manufacturing a battery cell.

Referring to FIG. 4, first, a can 100 including a side wall portion 110, a bottom portion 120 connected to one axial end of the side wall portion 110, an open end provided at the other axial end of the side wall portion 110, is prepared and then a first electrode terminal preform 200' and an electrode assembly 50 are assembled to the can 100.

Compared to case where a can riveted to electrode terminals is supplied from an external vendor, the entire process of assembling other components to the can 100 may be performed on the production line, which may be managed as an internal management item, thereby contributing to quality improvement.

For example, as illustrated in FIG. 4, the first electrode terminal preform 200' may include a current collector surface 210 positioned on the inner side of the can 100, and a column portion 220 extending from the current collector surface 210, penetrating the can 100 to protrude to the outside of the can 100, and having a first hole H formed in the central part through the current collector surface 210.

The current collector surface 210 may extend parallel to the bottom portion 120. The column portion 220 may extend perpendicular to the current collector surface 210 from the current collector surface 210 toward the outside of the can 100. The column portion 220 may extend in a direction parallel to the axial direction of the electrode assembly 50.

The column portion 220 may have a hollow pipe shape to define the first hole H.

Conventionally, an electrode terminal is inserted from the outside to the inside of the can through the bottom portion of the can, and a caulking jig for riveting is inserted from the open end of the can to compress the inner portion of the electrode terminal toward the inner surface of the bottom portion of the can. According to this method, the caulking jig should be inserted into the can, and due to the narrow internal space of the can, there is a limitation in that the vertical movement of the caulking jig is difficult to be performed accurately and efficiently. In the first electrode terminal preform 200' according to the present disclosure, the current collector surface 210 has a portion that extends radially further outward than the through hole 130 and interferes with the bottom portion 120 of the can 100, and the column portion 220 has a portion protruding outward from the inside of the can 100. Therefore, by inserting the first electrode terminal preform 200' from the inside of the can 100, the first electrode terminal preform 200' may be prevented from being separated from the bottom portion 120 through the current collector surface 210 and the column portion 220 may be plastically deformed from the outside of the can 100. Accordingly, an accurate and efficient riveting operation may be performed outside the can 100 using a spinning device or the like.

In the present disclosure, this first electrode terminal preform 200' may be first assembled to the bottom portion 120, then the electrode assembly 50 may be accommodated in the can 100, and subsequently, the current collector surface 210 of the first electrode terminal preform 200' and the electrode assembly 50 may be electrically connected. The first current collector plate 60 may be used for electrical connection between the current collector surface 210 and the electrode assembly 50.

As another example, the current collector surface 210 of the first electrode terminal preform 200' and the electrode assembly 50 may be first electrically connected, and then the first electrode terminal preform 200' may be assembled to the bottom portion 120 while accommodating the electrode assembly 50 in the can 100. After first welding the first electrode terminal preform 200' and the first current collector plate 60, the first current collector plate 60 may be welded to the first uncoated portion 52 of the electrode assembly 50 to make an electrical connection, and then the first electrode terminal preform 200' may be inserted into the through hole 130 of the bottom portion 120.

Conventionally, the electrode terminal should be riveted inside the can, and then the flat portion of the electrode terminal and the current collector plate should be welded inside the can, wherein a welding horn tip is inserted into a hole formed in the winding center of the electrode assembly to allow the electrode terminal and the current collector plate to be welded. At this time, spatter generated during welding may cause issues such as damage to the separator, reduced battery capacity, and decreased life, thereby necessitating the use of weak welding in some cases. Additionally, since it is difficult to reduce the diameter of the welding horn tip, there is a limitation of increasing the energy density of the electrode assembly.

In contrast, according to an embodiment of the present disclosure, all welding for electrical connection between the first electrode terminal preform 200' and the electrode assembly 50 may be performed outside the can 100, thereby preventing welding spatter from flowing into the can 100, solving issues related to weak welding, and increasing energy density because the hole size of the winding center may be made smaller without considering the diameter of the welding horn tip.

And, even if spatter is generated during welding, the spatter does not flow into the can 100, which blocks damage to the separator of the electrode assembly 50. Additionally, issues related to reduced battery capacity and life may be solved. Furthermore, since welding is performed outside the can 100, various welding methods such as laser welding and ultrasonic welding may be used.

When using ultrasonic welding, the horn should contact the contact portion and vibrate, and in conventional methods of welding inside the can, the horn should have a longer length than the hole formed at the winding center, so that there is a significant risk of horn breakage when a strong vibration occurs in a straight or zigzag direction. Considering this, a rotational motion method of the horn may be applied, and even in this case, there are problems of generating a lot of burrs and making it difficult to check the presence of partially unbonded regions. Furthermore, in the case of ultrasonic welding, there may be a problem due to foreign matter (metal shavings) generated during welding.

In the present disclosure, since welding is performed outside the can 100, ultrasonic welding may be performed using a short horn, strong vibrations may be applied, the welded area may be observed from the outside to allow for welding without any unbonded regions, and foreign matter generated during welding may be prevented from flowing into the battery, thereby eliminating potential problems.

In order to perform laser welding inside a conventional can, the optical system of the laser welding device should be configured such that the laser beam does not deviate from the hole formed in the winding center, the laser should be well focused with a length as long as the hole formed in the winding center, and the laser beam should pass through the hole formed in the winding center, so that it is difficult to prevent damage to the surrounding electrode assembly during the welding process. In the present disclosure, since welding is performed outside the can 100, the optical system of the laser welding device does not need to be specially changed or upgraded, and since the laser beam does not pass around the electrode assembly 50, there is no damage to the electrode assembly 50. Therefore, it is preferable that laser welding with good welding strength may be conveniently used for coupling the first electrode terminal preform 200', the first current collector plate 60, and the electrode assembly 50. In the present disclosure, since deformation due to contact pressure welding such as resistance welding may be prevented by applying laser welding, it is advantageous not only for ensuring quality and performance but also for increasing product yield. According to laser welding, there is no need to replace welding rods or horns, which is advantageous for improving production efficiency and for reducing production cost, and may reduce manufacturing process time. And, laser welding has higher bonding strength than ultrasonic welding, and may secure the uniformity of welding performance and quality compared to resistance welding.

When inserting the electrode assembly 50 into the can 100, the second current collector plate 70 may be connected to or disconnected from the electrode assembly 50.

Thereafter, the open end of the can 100 is covered and closed with a lid 300. At this time, after covering the open end of the can 100 with the lid 300, the side wall portion 110 of the can 100 and the edge contact surface of the lid 300 may be bonded.

Prior to this, a step of connecting the second current collector plate 70 and the can 100 may be further included. And, a step of connecting the second current collector plate 70 and the lid 300 may be further included.

After bonding the can 100 and the lid 300, an electrolyte is injected into the can 100 through the first hole H.

Next, as illustrated in FIG. 5, by plastically deforming the column portion 220 protruding to the outside of the can 100 through spinning processing, a terminal surface 230 extending from the column portion 220 and positioned outside the can 100 is formed, as shown in FIG. 3.

Spinning processing is to compress a location to be riveted by applying a rotational force thereto. Spinning processing has the advantage of reducing the number of process management points and lowering equipment investment costs compared to conventional riveting methods for several times.

The spinning device 400 used in spinning processing may include a spinning tool 410 and a spinning body 420. The spinning body 420 refers to the main body of the spinning device 400 that provides a rotational force to the spinning tool 410. The spinning tool 410 is in contact with the upper part (and one upper side) of the column portion 220 protruding from the first electrode terminal preform 200' to the outside of the can 100 while rotating at high speed, thereby deforming the shape of one side of the column portion 220. As a result, the entire protruding part of the column portion 220 is plastically deformed by the spinning tool 410 to become an external flange portion 232, and thus may have a shape of pressing the bottom portion 120 and the terminal gasket 140.

In this process, the column portion 220 may be plastically deformed not only radially outward but also radially inward, so that the inner diameter of the first hole H at the center of the column portion 220 may be reduced, and the column portion 220 may be deformed so that only the second hole H' smaller than the first hole H remains.

Since the electrode assembly 50 and the first electrode terminal preform 200' fill the internal space of the can 100 inside the can 100, the column portion 220 may be plastically deformed outside the can 100 using the spinning device 400 even without a separate jig inside the can 100. At this time, a mold (not shown) may be further disposed around the column portion 220 so that the diameter of the external flange portion 232 may be precisely set by consistently adjusting the deformation of the column portion 220.

The mold is aligned with the column portion 220 and has a hole with an inner diameter larger than that of the column portion 220. This ensures that when the spinning tool 410 deforms the column portion 220, the plastic working portion contacts the inner circumferential surface of the mold and does not expand further.

According to this embodiment, the diameter of the external flange portion 232 is regulated by the mold, and even though the deformation of the first electrode terminal preform 200' for riveting occurs outside the can 100, the dimensions of the terminal surface 230 may be formed accurately and consistently.

As such, according to the present disclosure, the first electrode terminal 200 may be fixed to the outside of the can 100 during the process of riveting the first electrode terminal 200 to the can 100. Accordingly, there is an effect of suppressing the generation of foreign matter inside the can 100 during the manufacturing of the battery cell 10.

And, conventionally, it has been difficult to maximize the flat portion area of the electrode terminal. In contrast, as shown in detail in FIG. 3, the first electrode terminal 200 of the present disclosure may maintain the flat portion by not performing any other processing on the current collector surface 210 while the current collector surface 210 is flattened, thereby maximizing the bonding area with the first current collector plate 60.

Furthermore, in the embodiment of the present disclosure, the diameter S of the current collector surface 210 with reference to FIG. 3 may be expanded so that it becomes a disk having an area corresponding to the first uncoated portion 52 of the electrode assembly 50 to the extent that the first current collector plate 60 is not necessary.

For example, in the case of a form factor 4680 battery cell, when the diameter of the flat portion of a conventional electrode terminal is about 4 cm, the diameter S of the current collector surface 210 of the present embodiment may be expanded to about 7 cm. The coupling area between the current collector surface 210 and the first current collector plate 60 may be larger than in the conventional design. In this way, the welding area between the first electrode terminal 200 and the first current collector plate 60 may be maximized, thereby increasing the amount of current flowing between the first electrode terminal 200 and the first current collector plate 60.

Additionally, the height D of the first electrode terminal 200 may be further reduced compared to the prior art. For example, in the case of a form factor 4680 battery cell, when the axial height of a conventional electrode terminal is about 1.2 cm, the height D of the first electrode terminal 200 may be reduced to as low as 0.9 cm in the present disclosure, particularly by reducing the thickness of the current collector surface 210. Even if the thickness of the current collector surface 210 is reduced, the current collector surface 210 is wide enough to secure sufficient sealing properties. Then, the vertical height of the electrode assembly 50 may be increased even for cells of the same external shape, thereby increasing the energy density of the battery cell 10.

In FIG. 3, the second hole sealing portion 240 may be a molten metal solidification portion 250. In an embodiment, the molten metal solidification portion 250 is formed by melting and then solidifying the portion of the first electrode terminal 200 surrounding the second hole H'. Melting may be induced by localized laser irradiation or by friction stir welding.

Preferably, the molten metal solidification portion 250 may be formed by irradiating the laser in the same manner as laser welding. The molten metal solidification portion 250 may be a weld bead. The weld bead is formed through laser welding. The weld bead refers to the deposited metal created by a single weld pass (a single laser beam pass) and may be called a weld spot. The size, shape, position, and degree of overlap of the weld bead may vary depending on the welding conditions. Welding methods using a laser beam include wobble welding, spot welding, weaving (hatching) welding, scanning welding, and the like, and if the size of the second hole H' is very small, even a single spot welding may fill the second hole H'. The depth of the weld bead may be controlled by adjusting the laser welding intensity. The weld bead may be formed only partially near the surface of the second hole H', or may be formed to fill the entire second hole H' up to the portion expanded to the first hole H.

The terminal surface 230 may constitute a flat portion. The surfaces of the terminal surface 230 and the second hole sealing portion 240 may function as the positive terminal of the battery cell 10. Therefore, it is preferable that the terminal surface 230 is formed to be flat. If the second hole sealing portion 240 is formed using a weld bead, it may not have a uniformly flat shape. Therefore, in some cases, after forming the second hole sealing portion 240, it may be necessary to flatten the surfaces of the terminal surface 230 and the second hole sealing portion 240. In conclusion, the surfaces of the terminal surface 230 and the second hole sealing portion 240 may constitute a flat portion parallel to the bottom portion 120 of the can 100. Here, the term 'parallel' means substantially parallel when observed with the naked eye. The term 'flat' means level.

Since the first hole H is formed in the first electrode terminal preform 200', an electrolyte may be injected through the first hole H, and an injection port may not be provided in the lid 300. The first hole H may be reduced in size to be smaller than the first hole H by deformation of the first electrode terminal preform 200' during the plastic working of the first electrode terminal preform 200', that is, during the formation of the external flange portion 232, so that only the second hole H' remains. Thereafter, the portion of the first electrode terminal around the second hole H' may be locally melted by irradiating a laser around the second hole H', and then after a cooling process, the molten metal may be solidified to fill the second hole H' and leave only the molten metal solidification portion 250.

Therefore, the battery cell 10 may be manufactured by injecting the electrolyte through the first electrode terminal 200 and sealing it, without the need to provide an injection port in the lid and seal it with a separate sealing component, as in the prior art. According to an embodiment of the present disclosure, the process of assembling the electrode terminal and the process of sealing the injection port, which had to be performed as separate processes in the prior art, are integrated.

As another example, the molten metal solidification portion 250 may be formed by melting a filler of the same material as the material of the first electrode terminal 200 on the first hole H. In this case, there is an advantage of easily securing the flatness of the surface of the molten metal solidification portion 250 and the surface of the external flange portion 232.

As still another example, the molten metal solidification portion 250 may be formed by melting a soldering material. The soldering material may effectively fill the second hole H' left by the deformation of the first electrode terminal preform 200' and secure the flatness of the surface of the molten metal solidification portion 250 and the surface of the external flange portion 232.

FIG. 6 is a modified example of FIG. 3.

In another embodiment, a cap 260 coupled to the external flange portion 232 to block the first hole H may be further included. The cap 260 constitutes the second hole sealing portion 240. In other words, the second hole sealing portion 240 shown in FIG. 3 may be the cap 260 of FIG. 6 coupled to the external flange portion 232 to block the first hole H.

At this time, the cap 260 may include a substrate portion 262 in contact with the axial surface of the external flange portion 232, and an alignment protrusion 264 extending axially inward from the substrate portion 262 and inserted into the second hole H'.

The cap 260 may be bonded to the external flange portion 232. For example, the edge of the substrate portion 262 may be laser welded to the external flange portion 232.

It is preferable to avoid using a separate sealing component as much as possible, but a cap 260 including a substrate portion 262 with a flat surface may be used to ensure the flatness of the terminal surface 230.

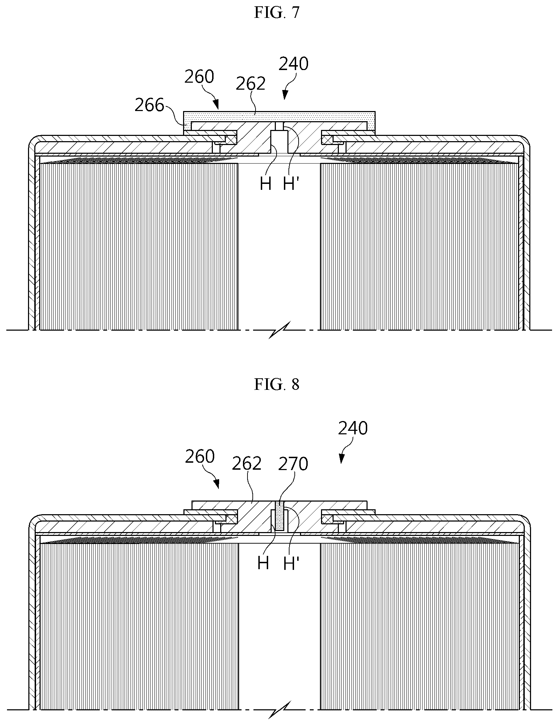

FIG. 7 is a modified example of FIG. 6.

Here, the cap 260 forms a rib 266 by bending the outer periphery of the substrate portion 262 downward, and the rib 266 is coupled to the external flange portion 232 while surrounding the edge of the external flange portion 232. The inner circumferential surface of the rib 266 and the outer circumferential surface of the external flange portion 232 may be in close contact.

FIG. 8 is another modified example of FIG. 3.

Here, the cap 260 is a block 270 embedded inside the second hole H' at the same height as the external flange portion 232. The block 270 may be inserted into the second hole H'. The outer diameter of the block 270 may be configured to be the same as the inner diameter of the second hole H'. Alternatively, the outer diameter of the block 270 may be configured to be slightly larger than the inner diameter of the second hole H'. In this case, the block 270 may be forcibly fitted into the second hole H'. Therefore, the block 270 may be fixed in a specific position without moving up and down after being inserted into the second hole H'. The outer circumferential surface of the block 270 and the inner circumferential surface of the second hole H' may be coupled by seam welding, but even before welding, the block 270 does not move in the winding axis direction, thereby allowing for smooth welding.

The block 270 may have a length extending beyond the second hole H' to the first hole H.

Referring to FIG. 3 again, the terminal gasket 140 is interposed between the first electrode terminal 200 and the can 100, and may include an outer gasket 142, an inner gasket 144, and an intermediate gasket 146. The outer gasket 142, the inner gasket 144, and the intermediate gasket 146 may have different thicknesses depending on the positions thereof.

The outer gasket 142 is a portion interposed between the external flange portion 232 and the outer surface of the bottom portion 120, the inner gasket 144 is a portion interposed between the internal flange portion 212 and the inner surface of the bottom portion 120, and the intermediate gasket 146 is a portion interposed between the column portion 220 and the through hole 130. The outer gasket 142 and the inner gasket 144 are divided based on the outer surface of the bottom portion 120 of the can 100. In the present disclosure, the thickness of the current collector surface 210 may be reduced. Therefore, it is possible to prevent the current collector surface 210 and the inner gasket 144 from interfering with other components.

The outer gasket 142 may be exposed at least partially to the outside of the external flange portion 232 of the first electrode terminal 200. The purpose of exposing the outer gasket 142 is to insulate the first electrode terminal 200 from the bottom portion 120 having the opposite polarity to the first electrode terminal 200. For electrical insulation between the first electrode terminal 200 and the bottom portion 120, the exposure width of the outer gasket 142 may be 0.1 mm to 1 mm. If the exposure width is less than 0.1 mm, the electrical insulation between the first electrode terminal 200 and the bottom portion 120 may be destroyed on a plane during high C-rate charging and discharging of 300 A or more. Additionally, if the exposure width is greater than 1 mm, the electrical insulation effect is not further enhanced, and instead, the area of the bottom portion 120 used as the negative electrode region is reduced, thereby reducing the contact area of the components used for connection (e.g., busbar).

As shown in FIG. 3, the inner gasket 144 and the intermediate gasket 146 may form an integral first gasket 150a. Therefore, the terminal gasket 140 may include a first gasket 150a interposed between the internal flange portion 212 and the can 100 in the radial direction and between the column portion 220 and the inner circumferential surface of the can 100 defining the through hole 130 in the axial direction, and a second gasket 150b interposed between the external flange portion 232 and the can 100 in the radial direction and being an outer gasket 142 formed separately from the first gasket 150a.

The first gasket 150a may be in close contact with the bottom portion 120 of the can 100 from the inside of the can 100 while being inserted into the first electrode terminal preform 200'. After completing injection and before proceeding with the spinning process, the second gasket 150b is fitted onto the column portion 220 from the outside of the can 100, and while forming the terminal surface 230 by plastic deforming the column portion 220 through the spinning process, the second gasket 150b may be brought into close contact with the bottom portion 120 of the can 100.

The terminal gasket 140 may be made of an insulating and elastic polymer resin. In one example, the terminal gasket 140 may be made of polypropylene, polybutylene terephthalate, polyfluoroethylene, or the like, but the present disclosure is not limited thereto.

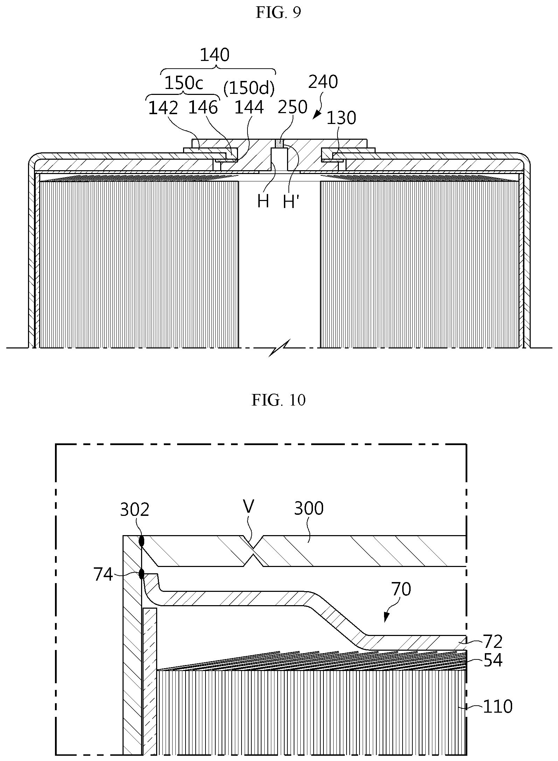

FIG. 9 is still another modified example of FIG. 3.

Here, the outer gasket 142 and the intermediate gasket 146 are integrally formed. Accordingly, the terminal gasket 140 may include a third gasket 150c interposed between the external flange portion 232 and the can 100 in the radial direction and between the column portion 220 and the inner circumferential surface of the can 100 defining the through hole 130 in the axial direction, and a fourth gasket 150d interposed between the internal flange portion 212 and the can 100 in the radial direction and being an inner gasket 144 formed separately from the third gasket 150c.

As another example, the inner gasket 144, the intermediate gasket 146, and the outer gasket 142 of FIG. 3 may be integrally formed.

FIG. 10 is an enlarged view of part B of FIG. 2, and illustrates a vertical inversion of part B of FIG. 2.

The lid 300 has a disk shape to block the open end of the can 100 and may close it by bonding the side wall portion 110 of the can 100 and the edge of the lid 300.

The lid 300 may be press-fitted through the open end of the can 100. The lid 300 may be configured to bond and close the side wall portion 110 of the can 100 and the edge of the lid 300 so that the can 100 and the lid 300 are electrically connected while the electrode assembly 50 is accommodated inside the can 100. The bonding may be performed by welding, brazing, or soldering.

The lid 300 may include a welded portion 302 on a surface where the lid 300 and the can 100 contact each other by laser welding to the can 100. The welding may be performed by a laser irradiated axially inward.

A second current collector plate 70 may be bonded to the second uncoated portion 54 to be electrically connected thereto. The second current collector plate 70 has a coupling surface 72 connected to the second uncoated portion 54, and welding may be performed at this coupling surface 72. The edge of the second current collector plate 70 may be laser-welded to the can 100 to form a welded portion 74 on the surface where the second current collector plate 70 and the can 100 contact each other. The second uncoated portion 54, the second current collector plate 70, and the can 100 are connected, and the can 100 and the lid 300 are connected, which may allow the lid 300 to be electrically connected to the second uncoated portion 54.

In the manufacturing process, the welded portion 74 is formed first, and then the welded portion 302 is formed. Since the welded portion 74 is formed first and the welding quality may be checked before forming the welding portion 302, there is little occurrence of defects.

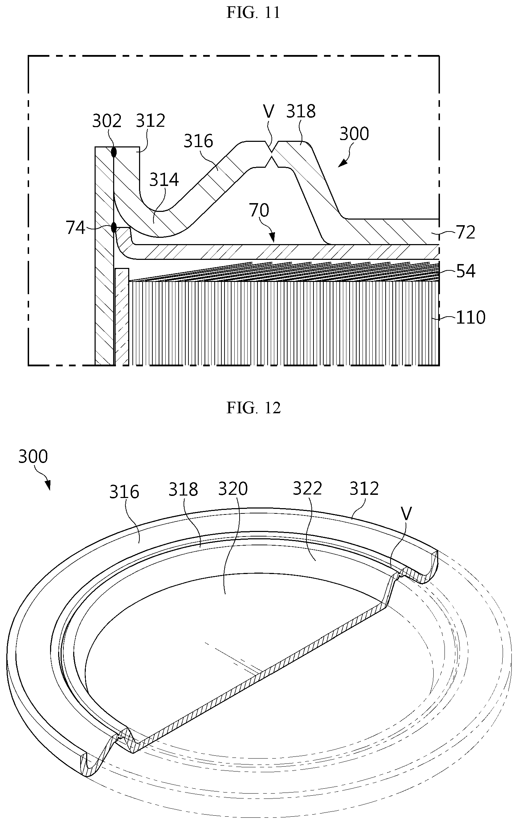

FIG. 11 is a modified example of FIG. 10. FIG. 12 is a partial cutaway perspective view showing an example of another lid.

Comparing FIGS. 11 and 12 first, the lid 300 of FIG. 12 is directly bonded to the second uncoated portion 54 without the second current collector plate 70 of FIG. 11.

In FIG. 11, the lid 300 may sequentially include a mating surface 312, a curved surface 314, an inclined surface 316, and a support surface 318 from the radially outer side to the inner side. In FIG. 12, the lid 300 may further include an electrode connection portion 320 connected to the support surface 318.

The mating surface 312, the curved surface 314, and the inclined surface 316 may form a U-shaped bent portion. The mating surface 312 is provided on the radially outer edge of the lid 300, and extends axially so that the outer circumferential surface thereof contacts the inner circumferential surface of the side wall portion 110. The curved surface 314 is connected to the lower end of the mating surface 312 of the can lid 300, that is, the axially inner end of the mating surface 312, and has a downwardly convex cross-sectional shape that extends inward radially toward the inner side axially. The slope of the curved surface 314 gradually becomes gentler as it moves away from the mating surface 312. Since the mating surface 312 extends axially in parallel, the slope of the tangent line of the outer circumferential surface of the curved surface 314 may gradually decrease from 90 degrees as it moves away from the mating surface 312.

The inclined surface 316 continues from the curved surface 314. The inclined surface 316 extends outward axially toward the inner side radially, and the slope thereof may be constant.

The lid 300 having a U-shaped bent portion is suitable for being press-fitted through the open end of the can 100. The curved surface 314 and the inclined surface 316 provide a cross-sectional shape that allows the lid 300 to be elastically deformed radially inward. Accordingly, when the lid 300 is press-fitted into the open end, the lid 300 may be fitted into the open end as the U-shaped bent portion is compressed and then spread without causing deformation of other parts to the maximum extent. Accordingly, a radial adhesion between the side wall portion 110 of the can 100 and the mating surface 312 may be secured. In other words, the mating surface 312 may be strongly abutted without being distorted during the process of press-fitting the lid 300 into the open end of the can 100.

A support surface 318 extending horizontally in the radial direction may be provided radially further inward than the curved surface 314 in the lid 300. The support surface 318 may be connected to the radially inner end of the inclined surface 316, and may extend horizontally radially inward from the connection part. The support surface 318 provides a flat surface between the inclined surface 316 and the electrode connection portion 320. Therefore, the surface of the support surface 318 may have a flat ring shape, and may serve as a foot for the battery cell 10 when the battery cell 10 is erected with the lid 300 placed on the bottom.

The axial outer surface of the support surface 318 may be disposed axially further outward than the axial outer end of the mating surface 312. That is, the height of the axial outer surface of the support surface 318 may be higher than the height of the axial outer end of the mating surface 312. Accordingly, when the battery cell 10 is erected on the bottom, the welded portion 302 between the mating surface 312 and the side wall portion 110 is not directly subjected to a load, and thus the welded portion 302 may be protected.

In FIG. 11, the shape of the second current collector plate 70 is different from the shape of the second current collector plate 70 of FIG. 10. And, in FIG. 11, the curved surface 314 of the lid 300 is in contact with the second current collector plate 70.

In FIG. 12, an electrode connection portion 320 extending horizontally in the radial direction may be provided radially further inward than the support surface 318 in the lid 300. The electrode connection portion 320 may be connected to the radially inside of the support surface 318 and may be recessed into the can 100. The electrode connection portion 320 may be provided by plastic working so that a predetermined portion of the lid 300 in the form of a metal sheet is recessed axially inward.

When the lid 300 is press-fitted into the can 100, the lid 300 may be press-fitted to a position where the bottom surface (axial inner surface) of the electrode connection portion 320 is in close contact with the second uncoated portion 54 of the electrode assembly 50 accommodated inside the can 100. The electrode connection portion 320 and the second uncoated portion 54 may be bonded by welding. The welding may be performed by irradiating a laser onto the axial outer surface of the electrode connection portion 320 from the axial outer side. The laser may be irradiated in a scanning manner along the radial direction to form a welded portion extending long radially. In this way, the lid 300 functions as a second current collector plate 70 while also functioning as a cover for closing the open end of the can 100.

The bonding part between the electrode connection portion 320 and the second uncoated portion 54 may extend radially. The electrode connection portion 320 may be disposed radially further inward than the support surface 318. The electrode connection portion 320 may have a shape axially recessed relative to the support surface 318. A second inclined surface 322 that extends inward axially toward the inner side radially and has a substantially constant slope may be provided between the electrode connection portion 320 and the support surface 318 in the radial direction. The second inclined surface 322 may extend inward axially toward the inner side radially and have a substantially constant slope. The slope of the inclined surface 316 may be smaller than the slope of the second inclined surface 322. That is, the second inclined surface 322 may be steeper than the inclined surface 316. Accordingly, the radial length of the support surface 318 and the electrode connection portion 320 may be secured to the maximum extent.

The electrode connection portion 320 may extend radially outward by at least 0.5 times the radius of the can 100. Accordingly, the radial bonding length between the electrode connection portion 320 and the second uncoated portion 54 may be sufficiently secured. Preferably, the electrode connection portion 320 may extend radially outward by at least 0.7 times the radius of the can 100. The electrode connection portion 320 may provide a bottom surface extending flat in the radial direction. The height of the bottom surface of the electrode connection portion 320 may be lower than the height of the lower end of the curved surface 314. That is, the electrode connection portion 320 may protrude further axially inward than the curved surface 314. Then, the lower end of the curved surface 314 may allow the bottom surface of the electrode connection portion 320 to be in close contact with the second uncoated portion 54 of the electrode assembly 50 while being axially spaced apart from the electrode assembly 50 accommodated inside the can 100. Accordingly, the bonding process between the electrode connection portion 320 and the second uncoated portion 54 may be smoothly performed.

When the above-described lid 300 is applied, the bonding part between the lid 300 and the can 100 is simplified, and there is no need to use a current collector plate for electrically connecting the second uncoated portion 54 to the can 100, thereby reducing the number of components and assembly man-hours and securing more internal volume, enabling increased energy density.

In the examples illustrated in FIGS. 10 to 12, a vent V is provided in the lid 300. The vent V may be defined by a thin wall portion. Since the vent V is provided in the lid 300 without occupying a separate space, energy density may be further secured.

The vent V may be fractured when the pressure inside the can 100 exceeds a threshold. The vent V may be formed on one or both surfaces of the lid 300. The vent V may form a continuous or discontinuous circular pattern, a linear pattern, or any other pattern on the surface of the lid 300. For example, the vent V may be formed in the shape of a roughly circular ring with a constant width. This circular ring-shaped vent V may have the same center as the center of the lid 300.

Referring to FIG. 12, the vent V may be provided radially further outward than the electrode connection portion 320. Here, it is exemplified as being provided on the support surface 318. Preferably, the vent V may be implemented as a thin wall portion in which both surfaces of the support surface 318 are notched. The vent V has a sufficient strength to resist deformation under the force applied when press-fitting the lid 300 into the can 100, and is broken when internal pressure surges due to a short circuit or the like occurring inside the can 100, thereby separating the electrode connection portion 320 of the lid 300 from the mating surface 312 of the lid 300. Accordingly, the electrical connection between the electrode connection portion 320 connected to the second uncoated portion 54 and the can 100 is disconnected, and the internal space of the can 100 is opened to the outside, thereby emitting the gas causing the internal pressure.

Meanwhile, the vent V may be provided concentrically with the first electrode terminal 200 on the bottom portion 120 of the can 100. This vent V is broken when internal pressure surges due to a short circuit or the like occurring inside the can 100, which fractures the bottom portion 120 of the can 100 to open the internal space of the can 100 to the outside, thereby emitting the gas causing the internal pressure.

The fracture pressure of the can 100 may be controlled by adjusting the depth and width of the vent V. For example, the vent V may be set to be fractured when the pressure inside the can 100 is in the range of 15 to 35 kgf/cm². The vent V may be formed by notching to partially reduce the thickness of the can 100. The vent V may have a thickness gradient. The thickness gradient means that the vent V is formed to be inclined at a certain angle based on a predetermined horizontal plane when the cross-section of the vent V is checked. This vent V is fractured when the pressure inside the can 100 abnormally rises, and thus all the internal gas is emitted to the outside.

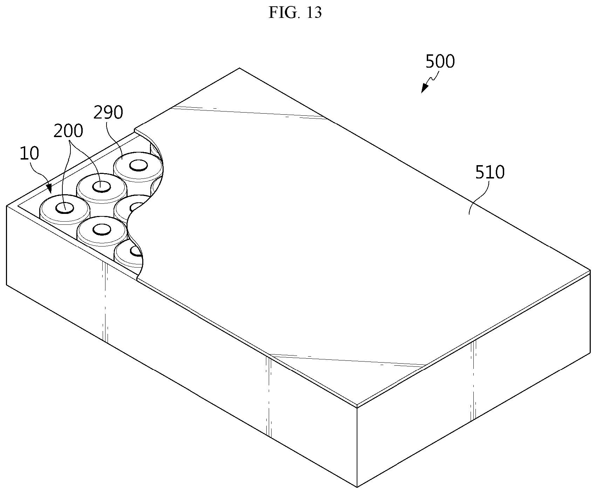

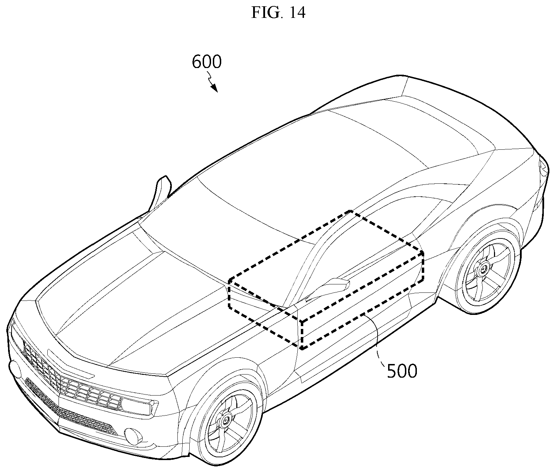

FIG. 13 is a view for describing a battery pack according to an embodiment of the present disclosure. FIG. 14 is a view for describing a vehicle including the battery pack of FIG. 13.

Referring to FIG. 13, a battery pack 500 according to the present disclosure may include at least one battery cell 10 according to the present disclosure described above. Additionally, the battery pack 500 according to the present disclosure may include a pack housing 510 capable of accommodating the at least one battery cell 10. The battery pack 500 may be configured using a battery module, which is an intermediate form of assembly, or may be configured directly without a battery module as illustrated. Since the battery cell 10 itself has a large volume, there may be no particular difficulty in implementing the battery pack 500 even without using an intermediate structure called a battery module.

In addition, the battery pack 500 may further include various components in addition to this battery cell 10, for example, components of the battery pack known at the time of filing of the present disclosure, such as a BMS, a pack case, a relay, a current sensor, and the like.

A plurality of battery cells 10 may be included in the battery pack 500. The battery cells 10 may be arranged in a predetermined number of rows, and may be arranged so that both the first electrode terminal 200 and the second electrode terminal 290 are placed on the upper side in each battery cell 10. Therefore, when electrically connecting the plurality of battery cells 10, both the positive electrode and the negative electrode may be connected in one direction, thereby simplifying the electrical connection structure. Accordingly, energy density may be improved by increasing the number of battery cells 10 that can be mounted in the same space, and electrical wiring work may be facilitated. Therefore, the space efficiency is excellent, and the electrical wiring efficiency is high, which has a significant improvement effect in the assembly process of an electric vehicle, and the assembly and maintenance of the battery pack 500. And, each battery cell 10 may have a higher energy density than a conventional cell, as described above. The battery pack 500 with the increased energy density in this way may store the same energy while reducing the volume and weight thereof.

Therefore, if the battery pack 500 to which these battery cells 10 are applied is mounted on a vehicle such as a vehicle 600 using electricity as an energy source as illustrated in FIG. 14, the mileage of the vehicle per unit of energy may be further expanded.

In addition, electrical wiring may be performed on the bottom portion 120 of the can 100 and the side where the first electrode terminal 200 is positioned, and may not be performed on the lid 300 positioned at the opposite side thereof, thereby maximizing the effect of the vent V formed on the lid 300. Additionally, if a heat sink, a cooling plate, or a tray is positioned on the lid 300 side, the purpose of assembly and cooling may be effectively achieved regardless of the electrical wiring connection part. In addition, the gas emitted from the inside of the secondary battery is emitted downward by assembling the vent V to be placed downward. Usually, the secondary battery is mounted at a lower position than the passengers of a vehicle such as an EV, and thus if the gas is emitted upward from the secondary battery, it may cause harm to the passengers. The battery cell 10 of the present disclosure may effectively emit high-pressure gas inside the secondary battery, and is also safe because of being irrelevant to the electrical wiring connection part at the top, and furthermore, when the gas is emitted due to the fracture of the vent V, it is emitted downward and does not cause harm to the passengers, thereby greatly improving safety.

Referring to FIG. 14, a vehicle 600 according to the present disclosure may include at least one battery pack 500 according to the present disclosure.

The battery cell 10 according to the present disclosure may be applied to vehicles such as electric vehicles or hybrid vehicles. That is, the vehicle 600 according to the present disclosure may include the battery cell 10 according to the present disclosure or the battery pack 500 according to the present disclosure. Additionally, the vehicle 600 according to the present disclosure may further include various other components included in the vehicle, in addition to the battery cell 10 or the battery pack 500. For example, the vehicle 600 according to the present disclosure may further include a vehicle body, a motor, a control device such as an electronic control unit (ECU), and the like, in addition to the battery cell 10 according to the present disclosure. The vehicle 600 includes a four-wheeled vehicle and a two-wheeled vehicle. The vehicle 600 may operate by receiving power from the battery pack 500 according to an embodiment of the present disclosure.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

### [Explanation of Reference Signs]

| | | | |
|---|---|---|---|
| 10: | Battery cell | 50: | Electrode assembly |
| 100: | Can | 110: | Side wall portion |
| 120: | Bottom portion | 130: | Through hole |
| 140: | Terminal gasket | 142: | Outer gasket |
| 144: | Inner gasket | 146: | Intermediate gasket |
| 200: | First electrode terminal | 210: | Current collector surface |
| 212: | Internal flange portion | 220: | Column portion |
| 230: | Terminal surface | 232: | External flange portion |
| 240: | Second hole sealing portion | 250: | Molten metal solidification portion |
| 260: | Cap | 262: | Substrate portion |
| 264: | Alignment protrusion | 266: | Rib |
| 270: | Block | 290: | Second electrode terminal |
| 300: | Lid | 500: | Battery pack |
| 600: | Vehicle | H: | First hole |
| H': | Second hole | V: | Vent |

## Claims

1. A battery cell comprising:
an electrode assembly;
a can accommodating the electrode assembly; and
a first electrode terminal electrically connected to the electrode assembly,
wherein the first electrode terminal comprises a current collector surface positioned on an inner side of the can, a column portion extending from the current collector surface and penetrating through the can, and a terminal surface extending from the column portion and positioned on an outer side of the can,
wherein the column portion has a first hole penetrating the current collector surface,
wherein the terminal surface has a second hole communicating with the first hole and smaller than the first hole, and
wherein the second hole is sealed at a surface of the terminal surface.

2. The battery cell according to claim 1,
wherein the can comprises a side wall portion, a bottom portion connected to one axial end of the side wall portion, and an open end provided at another axial end of the side wall portion, and the battery cell comprises a lid covering the open end.

3. The battery cell according to claim 2,
wherein the electrode assembly is an assembly in which a first electrode and a second electrode are wound with a separator interposed therebetween, and the electrode assembly is accommodated inside the can so that an uncoated portion of the second electrode faces the open end.

4. The battery cell according to claim 3,
wherein a through hole is formed in the bottom portion, and the first electrode terminal is electrically connected to the first electrode by penetrating the through hole.

5. The battery cell according to claim 4,
wherein the battery cell further comprises a first current collector plate electrically connected to the first electrode, at least a portion of the first current collector plate is coupled to an inner surface of the first electrode terminal, and a hole aligned with the first hole is formed in a central part of the first current collector plate.

6. The battery cell according to claim 2,
wherein the current collector surface forms an internal flange portion extending along an inner surface of the bottom portion from a first side of the column portion, and the terminal surface forms an external flange portion extending along an outer surface of the bottom portion from a second side of the column portion.

7. The battery cell according to claim 6,
wherein the inner surface of the internal flange portion is flat.

8. The battery cell according to claim 5,
wherein the current collector surface forms an internal flange portion extending along an inner surface of the bottom portion from a first side of the column portion, and
wherein the internal flange portion extends radially outward from the first side of the column portion disposed inside the can so as to extend radially further outward than the through hole, and is bonded to the first current collector plate.

9. The battery cell according to claim 8,
wherein the terminal surface forms an external flange portion extending along an outer surface of the bottom portion from a second side of the column portion, and
wherein the external flange portion is a plastic working portion formed by plastic working so that the second side protruding to the outside of the can in the column portion extends radially outward so as to extend radially further outward than the through hole.

10. The battery cell according to claim 1,
wherein the first electrode terminal is made of metal, and the terminal surface is formed by plastically deforming a part of the column portion that protrudes to an outside of the can.

11. The battery cell according to claim 1,
wherein a second hole sealing portion is formed on the terminal surface.

12. The battery cell according to claim 11,
wherein the second hole sealing portion is a molten metal solidification portion.

13. The battery cell according to claim 12,
wherein the molten metal solidification portion is formed by melting and then solidifying the first electrode terminal portion surrounding the second hole.

14. The battery cell according to claim 9, further comprising:
a cap coupled to the external flange portion and blocking the second hole.

15. The battery cell according to claim 14,
wherein the cap comprises a substrate portion in contact with an axial surface of the external flange portion; and an alignment protrusion extending axially inward from the substrate portion and inserted into the second hole.

16. The battery cell according to claim 1, further comprising:
a terminal gasket interposed between the first electrode terminal and the can.

17. The battery cell according to claim 16,
wherein the can comprises a side wall portion, a bottom portion connected to one axial end of the side wall portion, and an open end provided at another axial end of the side wall portion,
wherein a through hole is formed in the bottom portion, and the first electrode terminal penetrates the through hole,
wherein the current collector surface forms an internal flange portion extending along an inner surface of the bottom portion from a first side of the column portion, and the terminal surface forms an external flange portion extending along an outer surface of the bottom portion from a second side of the column portion, and
wherein the terminal gasket comprises an outer gasket interposed between the external flange portion and the outer surface of the bottom portion, an inner gasket interposed between the internal flange portion and the inner surface of the bottom portion, and an intermediate gasket interposed between the column portion and the through hole.

18. The battery cell according to claim 2,
wherein the lid has a disk shape to block the open end of the can and closes it by bonding the side wall portion of the can to the edge of the lid.

19. A method for manufacturing a battery cell, comprising:
a can preparation step of preparing a can comprising a side wall portion, a bottom portion connected to one axial end of the side wall portion, an open end provided at another axial end of the side wall portion, and then assembling a first electrode terminal preform comprising a current collector surface positioned on an inner side of the can, and a column portion that extends from the current collector surface, penetrates the can to protrude to the outside of the can, and has a first hole formed by penetrating the current collector surface in the central part, to the bottom portion;
an electrode assembly receiving step of accommodating the electrode assembly in the can;
a lid assembly step of covering and closing the open end of the can with a lid;
a step of injecting an electrolyte into the can through the first hole;
a step of plastically deforming the column portion protruding to the outside of the can to form a terminal surface extending from the column portion and positioned on an outer side of the can; and
a step of sealing the first hole on a surface of the terminal surface to complete the first electrode terminal.

20. The method for manufacturing a battery cell according to claim 19,
wherein the lid assembly step comprises:
a step of covering the open end of the can with the lid; and
a step of bonding the side wall portion of the can and an edge contact surface of the lid.

21. The method for manufacturing a battery cell according to claim 19,
wherein the current collector surface of the first electrode terminal preform and the electrode assembly are electrically connected to each other, and then the electrode assembly is accommodated in the can.

22. A battery pack comprising one or more battery cells according to any one of claims 1 to 18.

23. A vehicle comprising a battery pack according to claim 22.
